# EUROPÄISCHE PATENTSCHRIFT

(11) **EP 2 859 054 B1**
(45) Veröffentlichungstag und Bekanntmachung des Hinweises auf die Patenterteilung: **04.12.2019**
(21) Anmeldenummer: 13719863.6
(22) Anmeldetag: 02.05.2013
(51) Int. Cl.: C09D 11/102, C09D 11/037

(54) **SOL-GEL-FARBE SOWIE VERFAHREN ZU DEREN HERSTELLUNG**
SOL-GEL INK AND METHOD FOR THE PRODUCTION THEREOF
COULEUR SOL-GEL ET SON PROCÉDÉ DE FABRICATION

(30) Priorität: 06.06.2012 DE 102012104932; 28.11.2012 DE 102012111514
(43) Veröffentlichungstag der Anmeldung: 15.04.2015
(73) Patentinhaber: SCHOTT AG, 55122 Mainz (DE)
(72) Erfinder: ANTON, Andrea, 55595 Hüffelsheim (DE); MILANOVSKA, Angelina, 55120 Mainz (DE); BOCKMEYER, Matthias, 55116 Mainz (DE); GABRIEL, Annelie, 55270 Klein-Winternheim (DE); BACK, Franziska, 97422 Schweinfurth (DE)
(74) Vertreter: Blumbach · Zinngrebe Patentanwälte PartG mbB
(86) Internationale Anmeldenummer: PCT/EP2013/059168
(87) Internationale Veröffentlichungsnummer: WO 2013/182356

(56) Entgegenhaltungen:
- WO-A1-2011/144671
- DE-A1-102007 025 590
- DE-A1-102009 004 784
- US-A- 4 785 041
- US-A1- 2006 229 408
- US-A1- 2007 017 402
- US-B1- 6 863 923

## Beschreibung

### Gebiet der Erfindung

Die Erfindung betrifft eine Farbe, welche ein Sol-Gel-Bindemittel enthält sowie ein Verfahren zu deren Herstellung. Insbesondere betrifft die Erfindung eine pigmentierte Farbe, welche zum dekorativen Bedrucken von Glas und Glaskeramikplatten wie beispielsweise Kochfeldern geeignet ist.

### Hintergrund der Erfindung

Zum Aufbringen einer dekorativen Beschichtung von Glaskeramiken sind eine Reihe von Möglichkeiten bekannt.

So gibt es beispielsweise Metallschichten, welche mittels eines Sputterverfahrens aufgebracht werden. Nachteilig hieran ist, dass die Gestaltungsmöglichkeiten, insbesondere hinsichtlich der gewünschten Farbe, begrenzt sind. So ist beispielsweise der Einsatz von Effektpigmenten zur Farbgebung nicht möglich. Weiter ist beispielsweise das teilweise Beschichten des Substrates, welches beispielweise mittels Masken vorgenommen werden kann, aufwändig.

Weiter gibt es pigmentierte Schichten auf Silikonbasis. Diese zeigen jedoch vielfach eine nicht ausreichende mechanische Beständigkeit und eine schlechte Haftfestigkeit und können sich bei sehr hoher Temperaturbelastung (> 400 °C) verfärben.

Weiter können zur Beschichtung insbesondere von Kochfeldern pigmentierte Glasflüsse verwendet werden. Allerdings müssen glasflussbasierte Beschichtungen eine gewisse Porosität aufweisen, um die Festigkeit des Substrats unter thermischer und mechanischer Belastung nicht zu verringern. Da die Größe der Poren im Bereich der Wellenlänge des sichtbaren Lichtes liegt lässt sich auf diesem Weg nur eine matte Dekorationsschicht herstellen.

Weiter kann man Glaskeramikfelder mit Lüsterfarben oder Edelmetallschichten versehen. Hierdurch können wiederum nur spiegelnde Anmutungen erzielt werden. Der Einsatz von Effektpigmenten zur Farbgebung ist nicht möglich. Weiter ist beim Aufbringen der Schichten die Gefahr der Bildung von Defektstellen recht groß, was den Ausschuss bedeutend erhöht. Zudem müssen blickdichte Schichten entweder durch eine hohe Schichtdicke oder durch eine Bedruckung mit einer weiteren Schicht realisiert werden, was aufwändig und kostspielig ist.

Sol-Gel-Schichten auf Basis eines Sol-Gel-Bindemittels mit plättchenförmigen Pigmenten als farbgebende Komponente sind ebenfalls aus der Praxis bekannt. Die Gebrauchseigenschaften bekannter Sol-Gel-Farben sind allerdings dürftig. Insbesondere die Topfzeit, also die Zeit, innerhalb der die Farbe verarbeitet werden kann, ist vielfach gering und liegt oft unter sechs Wochen. Weiter weisen die Sol-Gel-Schichten Verfärbungen bzw. Entfärbungen bei einer Temperaturbelastung von >400°C auf. Weiter ist meist die mechanische Beständigkeit der Schichten nicht optimal. So liegt die Kratzbeständigkeit der Schichten oftmals unter 500 g im Bosch-Siemens-Hausgeräte Test. Auch kann es je nach Pigmentierung zu Ablösungen der Schicht bereits bei einer Temperaturbelastung von 200-300°C kommen.

Bekannte Sol-Gel-Farben zur Beschichtung von Glaskeramik, insbesondere von Kochfeldern, stellen in der Regel einen Kompromiss zwischen Verarbeitbarkeit und Handhabbarkeit der Farbe, der gewünschten Topfzeit, der gewünschten Dichtigkeit gegenüber Kontaktmedien, des gewünschten optischen Eindrucks, sowie der Beständigkeit, insbesondere gegenüber höheren Temperaturen dar, der meist nicht optimal ist.

Diese Sol-Gel-Farben beruhen dabei zumeist auf einem pigmentierten Sol-Gel-Netzwerk, welches zusätzlich Methyl und oder phenylfunktionalisierte Polysiloxanharze enthält. Durch die Kombination von Sol-Gel-Netzwerk mit einem zumeist hydroxyl- und oder alkoxydfunktionalisierten Polysiloxannetzwerk kommt es zu einer fortlaufenden Alterungsreaktion, welche auf Basis von Hydrolyse und Kondensationsreaktionen zu einer Vergelung und damit geringen Haltbarkeit (Topfzeit) der Sol-Gel-Farben führt.

Die Dokumente DE 196 50 139 C1, DE 10 2006 002 246 A1, und EP 0 938 457 B1 zeigen hochtemperaturfeste Beschichtungsmaterialien.

### Aufgabe der Erfindung

Der Erfindung liegt demgegenüber die Aufgabe zugrunde, die genannten Nachteile des Standes der Technik zu beheben bzw. zumindest zu reduzieren.

Es ist insbesondere eine Aufgabe der Erfindung, eine Sol-Gel basierte Farbe bereit zu stellen, welche sich zum Beschichten von temperaturbelasteten Substraten eignet und eine Dichtigkeit gegenüber Kontaktmedien, eine hinreichend lange Topfzeit und keine Veränderung des Farbortes unter Temperaturbelastung aufweist.

Im Speziellen ist es Aufgabe der Erfindung, eine langzeitstabile pigmentierte siebdruckfähige Sol-Gel-Farbe bereitzustellen, welche sich für die Herstellung von Kochflächen für Induktionskochgeräte und oder Gaskochflächen eignet.

### Zusammenfassung der Erfindung

Die Aufgabe der Erfindung wird bereits durch ein Verfahren zur Herstellung einer Sol-Gel-Farbe, sowie durch eine Sol-Gel-Farbe nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft ein Verfahren zur Herstellung einer siebdruckfähigen Sol-Gel-Farbe. Unter einer Sol-Gel-Farbe wird eine Farbe verstanden, welche aus einer Sol-Gel-Vorstufe, einem und oder mehreren Lösungsmitteln, Pigmenten und ggf. Hilfs- bzw. Anpaststoffen hergestellt wird.

Die Sol-Gel-Vorstufe wird durch Hydrolyse und Kondensation eines Silans oder Silangemisches unter Zugabe einer wässrigen Dispersion kolloidaler Partikel hergestellt.

Dabei wird ein erstes hydrolysierbares Silan der Formel RₙSiX₍₄₋ₙ₎ und ein weiteres hydrolysierbares Silan SiX₄ verwendet. R ist dabei ein aliphatischer oder aromatischer Rest und X eine hydrolytisch abspaltbare Gruppe. n nimmt Werte zwischen 1 und 3 an, wobei es sich versteht, dass neben tertiären (n = 1) und sekundären (n = 2) sowie singulären (n = 3) Silanen auch Mischungen derselben verwendet werden können.

Durch Hydrolyse von X und anschließende Kondensation zweier hydrolysierter Gruppen X bzw. einer hydrolysierten mit einer nicht hydrolysierten Gruppe X, bildet sich ein hybridpolymeres Sol-Gel-Netzwerk aus.
Bei der hydrolytisch abspaltbaren Gruppe handelt es sich vorzugsweise um eine Alkoholat-Gruppe, insbesondere eine Methoxy-, Ethoxy- oder Buthoxy-Gruppe. Aber auch ein Halogen, wie beispielsweise Chlor oder Brom kann als hydrolytisch abspaltbare Gruppe verwendet werden.

Über den molaren Anteil an aliphatischen oder aromatischen Restgruppen und den molaren Anteil an zur Reaktion zur Verfügung stehenden Menge an Wasser kann eingestellt werden, wie dichtmaschig dieses Netzwerk wird. Es versteht sich, dass R im Sinne der vorstehenden Definition nicht notwenig immer dieselbe Restgruppe sein muss, sondern dass auch Silane mit mehreren verschiedenen Restgruppen oder Mischungen von Silanen mit unterschiedlichen Restgruppen verwendet werden können.

Der Sol-Gel-Vorstufe werden des Weiteren anorganische Partikel, insbesondere Nanopartikel, als Füllstoff hinzugesetzt. Diese werden bevorzugt in kolloidaler Form als wässrige Dispersion während der Hydrolyse und Kondensation der Sol-Gel-Vorstufe beigemischt.

Als Partikel werden irregulär geformte Partikel verwendet, also Partikel, die nicht die Form eines regelmäßigen geometrischen Körpers (auch Platonischer Körper genannt) haben. Es werden also insbesondere keine kugelförmigen Partikel verwendet.

Vielmehr werden vorzugsweise Partikel verwendet, welche als Sekundärpartikel ausgebildet sind, die ihrerseits aus aggregierten Primärpartikeln mit kleinerer mittlerer Partikelgröße bestehen.

Bei Aggregaten bilden die Partikel im Unterschied zu Agglomeraten einen festen Verbund und die Primärpartikel können nicht bspw. durch Rühren in einer Flüssigkeit voneinander getrennt werden. Derartige Partikel werden insbesondere flammpyrolytisch hergestellt.

Die Partikel besitzen in der Regel eine unregelmäßige verzweigte Form.

Vorzugsweise weisen die Primärpartikel eine mittlere Partikelgröße zwischen 10 und 80 nm auf, wohingegen die Sekundärpartikel entlang der Richtung ihrer größten Ausbreitung eine mittlere Partikelgröße von mehr als 100 nm aufweisen.

Die Gestalt der Partikel kann durch deren fraktale Dimension (nach Mandelbrot) charakterisiert werden. Hierbei werden die Sekundärpartikel dreidimensional betrachtet. Die genaue Berechnung und Charakterisierung wird im Folgenden noch näher erläutert.

Bei einer Ausführungsform der Erfindung haben die Partikel eine fraktale Dimension von 1,5 - 3,0, bevorzugt von 2,0 - 3,0 und besonders bevorzugt von 2,0 - 2,5.

Bevorzugt werden anorganische Partikel, ganz besonders bevorzugt oxidische Partikel eingesetzt. Bevorzugt werden Partikel aus SiO₂ und/oder Al₂O₃ und oder SiO₂/Al₂O₃ TiO₂, ZrO₂, Y-stabilisiertem ZrO₂, Ca-stabilisiertem ZrO₂, Mg,stabilisiertem ZrO2, SnO₂, ZnO₂, MgO, Böhmit Andalusit, Mullit, und oder Mischoxiden hieraus verwendet.

In einer besonderen Ausführungsform werden amorphe und/oder teilkristalline, kolloiddisperse Al₂O₃-Partikel.

Besonders bevorzugt werden teilkristalline Al₂O₃-Partikel mit einer delta-Al₂O₃-Phase mit Defekt-Spinell-Struktur. Die besonders bevorzugt verwendeten Al₂O₃-Partikel weisen weiterhin tetraedrisch und oder oktaedrisch konfiguriertes Aluminium auf.

In einer besonderen Ausführungsform sind die Partikel oberflächlich stabilisiert, beispielsweise mit para-Toluolsulfonsäure.

Die Herstellung der verwendeten Partikel kann über Mahlprozesse, Aerosolverfahren wie z.B. Flammenhydrolyse und Sprühpyrolyse, Fällungsreaktion, Sol-Gel-Reaktion, Stöber-Prozess, Plasmaverfahren und Hydrothermal-Prozess erfolgen.

In einer Ausführungsform werden der Sol-Gel-Vorstufe weitere anorganische Partikel als Suspension, insbesondere alkoholische oder wässrige Suspension, zugeben.

Die anorganischen Partikel dienen der Minimierung des Schrumpfens während späterer Trocknungs- und Einbrennprozesse. Hierdurch ist es erst möglich, pigmentierte Sol-Gel-Schichten herzustellen, da damit unter thermischer Belastung keine Schrumpfungsrisse auftreten und somit der Farbort der Schicht unter thermischer Belastung sich nicht ändert.

Ferner führte die Funktionalisierung mit nanoskaligen Alumiumoxydpartikeln zur Verbesserung der thermischen Stabilität der Si-R (Methyl, Phenyl) Bindung. So kann beispielsweise durch die Verwendung von flammpyrolytisch hergestellten Partikeln als Füllstoff im Gegensatz zur Verwendung von nanoskaligen SiO₂-Partikeln eine um 50 °C erhöhte thermische Stabilität des hybridpolymeren Netzwerkes erreicht werden.

Weiter wird der Sol-Gel-Vorstufe ein Lösungsmittel zugesetzt, welches einen Siedepunkt von mehr als 120°C und eine Verdunstungszahl von >10 hat. Vorzugsweise wird ein Lösungsmittel mit einem Siedepunkt über 150°C und einer Verdunstungszahl von >500, besonders bevorzugt mit einem Siedepunkt über 200°C und einer Verdunstungszahl von >1000 verwendet. Derartige hoch siedende Lösungsmittel sind insbesondere Glykole und Glykolether, Terpene und Polyole, sowie Mischungen aus mehreren dieser Lösungsmittel. Es können Butylacetat, Methoxybutylacetat, Butyldiglykol, Butyldiglykolacetat, Butylglykol, Butylglykolacetat, Cyclohexynon, Diacetonalkohol, Diethylenglykol, Dipropylenglykolmonomethylether, Dipropylenglykolmonobuthylether, Propylenglykolmonobutylether, Propylenglykolmonopropylether, Propylenglykolmonoethylether, Ethoxypropylacetat, Hexanol, Methoxypropylacetat, Monoethylenglykol, Ethylpyrrolidon, Methylpyrrolidon, Dipropylenglykoldimethylether, Propylenglykol, Propylenglykolmonomethylether, Gemische aus parafinischen und naphthenischen Kohlenwawsserstoffen, aromatische Kohlenwasserstoffgemische, Mischungen aromatischer alkylkierter Hydrocarbone und Gemische von n-, i- und cyclo-Aliphaten als Lösungsmittel verwendet werden. Insbesondere können Polyethylenglykolether, wie beispielsweise Diethylenglykolmonoethylether, Tripropylenglykolmonomethylether und Terpineol als Lösungsmittel verwendet werden.

Hierbei können die Lösungsmittel sowohl der Sol-Gel-Vorstufe als auch der pigmentierten Farbe zugegeben werden.

Durch Entfernen und/oder teilweises Entfernen leichtflüchtiger Lösungsmittel, welche bspw. bei der Hydrolyse und Kondensation der Sol-Gel-Vorstufe entstehen, wird das Sol-Gel-Bindemittel erhalten. Hierdurch wird gewährleistet, dass die Sol-Gel-Farbe siebdruckfähig ist.

Weiter werden dem Sol-Gel-Bindemittel zum Erreichen des gewünschten Farbeindrucks Pigmente hinzugesetzt. Dabei kann auf nahezu alle bekannten Pigmente zurückgegriffen werden.

Insbesondere werden plättchenförmige Pigmente, beispielsweise beschichteter Glimmer, Graphit oder ein Gemisch aus Glimmer und Graphit verwendet.
Beispielsweise kann synthetischer Graphit mit einer Größe von 1-40 µm verwendet werden.

Auch können Festschmierstoffe oder Bornitrid verwendet werden.

Auch können nicht plättchenförmige Pigmente verwendet werden. Dies können beispielsweise farbgebende Pigmente sein.

Bevorzugt können temperaturstabile anorganische Pigmente verwendet werden, wie sie für Emaille-Beschichtungen für Kochflächen oder Glasbeschichtungen bekannt sind. Dies können etwa TiO₂, Spinelle, CrCu-Spinelle, Fe-Spinelle, Glimmer, glimmerbasierte Effektpigmente mit beispielsweise SiO₂ und/oder TiO₂ und/oder Fe₂O₃ und/oder SnO₂ basierte Beschichtungen sein.

Zur Farbgebung können dem Bindemittel ebenfalls organische Farbstoffe zugesetzt werden.

Zur Verbesserung der Siebdruckfähigkeit, Dispergierbarkeit, Vermeidung von Defekten und Bernard'schen Zellen können dem Sol-Gel-Bindemittel Hilfs- und Anpaststoffe, Entschäumer, Entlüfter, Nivelierer, Netz- und Dispergieradditive, Gleit-, Verlauf- und Substratnetzadditive zugegeben werden.

So konnte eine Sol-Gel-basierte Farbe bereitgestellt werden, deren Topfzeit mindestens 3 Monate, bevorzugt mindestens 6 Monate und besonders bevorzugt mindestens 1 Jahr, beträgt.

Als anorganische Partikel werden vorzugsweise Nicht-Metall-Oxyd oder Metall-Oxyd Partikel verwendet. Vorzugsweise liegt die aggregierte Partikelgröße zwischen 4 und 500 nm. Insbesondere werden bevorzugt nanoskalige Füllstoffe mit einer mittleren aggregierten Partikelgröße zwischen 8 - 200 nm, ganz besonders bevorzugt zwischen 10 - 150 nm eingesetzt. Insbesondere können nanoskalige Füllstoffpartikel der Oxyde oder Oxydhydrate von Si, Al, B, Zn, Ti oder Zr verwendet werden. Bei einer besonders bevorzugten Ausführungsform der Erfindung werden Aluminiumoxydpartikel verwendet.

Die mittlere Primärpartikelgröße der vorzugsweise eingesetzten anorganischen Füllstoffpartikel liegt zwischen 1 - 50 nm, bevorzugt 4 - 30 nm. Die mittlere Primärpartikelgröße und die mittlere aggregierte Partikelgröße werden bestimmt durch eine statistische Auswertung von Rasterelektronenmikroskop-Aufnahmen.

Die Füllstoffstoffpartikel können aus amorphen, teilkristallinen oder kristallinen Materialien bestehen.

Kristalline und/oder teilkristalline Füllstoffpartikel können beispielsweise bestehen aus Magnesiumfluorid, Magnesiumoxifluorid, Calciumfluorid, kubisches Zirkonoxid, tetragonales Zirkonoxid, monoklines Zirkonoxid, Anatas, Rutil, Aluminiumoxid-Spinelle, alpha-, gamma-Aluminiumoxid, Böhmit und/oder Siliziumoxid.

In einer bevorzugten Ausführungsform bestehen die Füllstoffpartikel aus mehr als 70 %, bevorzugt mehr als 90 % amorphen anorganischen Anteilen.

Die Füllstoffpartikel können beispielsweise mittels basenkatalytischer Hydrolyse und Kondensation sowie über pyrogene und thermische Herstellungsverfahren erzeugt werden.

Insbesondere werden über Gasphasenprozesse, bevorzugt flammpyrolytisch hergestellte Partikel mit einer mittleren Partikelgröße (Aggregatgröße) von 50 - 500 nm, vorzugsweise 100 - 200 nm, verwendet.

Die mittlere Primärpartikelgröße der über Gasphasenprozesse, bevorzugt flammpyrolytisch hergestellten Partikel liegt bei 1-50 nm, vorzugsweise 4 - 30 nm. Insbesondere können Aluminiumoxydpartikel verwendet werden, welche im Wesentlichen sphärische und/oder erdnussförmige Primärpartikel aufweisen

In einer Ausführungsform liegen die flammpyrolytisch hergestellten Partikeln aggregiert vor. Die Primärpartikelgröße liegt dabei immer deutlich unter der Aggregatgröße der Partikel.

In einer Ausführungsform weisen die nanoskaligen Füllstoffpartikel, welche während der Hydrolyse und Kondensation des Sol-Gel-Netzwerkes vorliegen, eine zumindest teilweise kettenförmige und oder erdnussförmige bzw. teilweise verzweige Partikel-Morphologie auf. Diese Partikelmorphologie, beispielsweise des Aluminiumoxyd und oder Siliziumoxyd, führt zu einer besonders guten Verarbeitbarkeit oder zu einem verbesserten Fließverhalten der Sol-Gel-Farbe.

Die eingesetzten Füllstoffpartikel sind vorzugsweise durch eine BET-Oberfläche, bestimmt nach der Methode der N₂-Sorption, von 30 - 300 m²/g, besonders bevorzugt 50 - 200 m²/g gekennzeichnet.

In einer Ausführungsform sind die Aluminiumoxydpartikel nicht kovalent in das Sol-Gel-Netzwerk eingebaut, so dass keine Si-O-Al-Bindung mittels NMR-Spektroskopie nachweisbar ist.

In einer weiteren Ausführungsform tritt durch die Einlagerung von Lösungsmittelmolekülen in freie Netzwerk-Zwischenräume ein zusätzlicher strukturviskoser bzw. Thixotropieeffekt ein.

Das Verhältnis von RₙSiX₍₄₋ₙ₎ zu SiX₄ beträgt bei einer bevorzugten Ausführungsform der Erfindung zwischen 2 und 6.

Es hat sich herausgestellt, dass sich bei diesem Verhältnis von tertiärem zu quartärem Silan bzw. zu den weiteren Silanen mit bzw. ohne vorhandene Restgruppen ein Netzwerk bildet, welches in besonders geringem Maße zur Vergelung neigt und lange Topfzeiten ermöglicht.

Als erstes hydrolysierbares Silan wird insbesondere ein tertiäres Silan, also RSiX₃ verwendet.

Bei einer bevorzugten Ausführungsform der Erfindung wird bei Herstellung der Sol-Gel-Farbe zur Hydrolyse und Kondensation ein saurer Katalysator hinzu gegeben, insbesondere wird die wässrige Dispersion auf einen pH-Wert von weniger als 3 eingestellt. Als saurer Katalysator kann insbesondere eine konzentrierte oder verdünnte Mineralsäure oder para-Toluolsulfonsäure verwendet werden. Die fertige Farbe hat vorzugsweise eine Menge von weniger als 5 %, besonders bevorzugt weniger als 3 % des saueren Katalysators (%-Angaben soweit nicht anders angegeben immer Gewichts-%).

Der Kondensationsgrad des Hybridnetzwerks wird vorzugsweise auf einen Wert zwischen 70 und 95 %, bevorzugt zwischen 70 und 90 % und besonders bevorzugt zwischen 70 und 80 % eingestellt. Der Kondensationsgrad eines hybridpolymeren Netzwerkes kann über ²⁹Si-NMR-Spektroskopie ermittelt werden.

Der Kondensationsgrad lässt sich durch Variation der Syntheseparameter, wie Reaktionstemperatur während der Hydrolyse, Menge an Wasser in der wässrigen Dispersion, sowie das genannte Verhältnis von erstem Silan zu weiterem Silan einstellen. Die Menge an Wasser wird durch den ROR-Wert angegeben. Dieser ist definiert als das molare Verhältnis von Wasser zu hydrolysierbaren Gruppen.

Beispielsweise kann durch Einstellung des ROR-Wertes in einem Bereich von 0,35 - 0,5 nach einwöchiger Alterung des Sols ein Kondensationsgrad der tertiären Gruppen von KG(T) 70 - 95 % eingestellt werden.

Je nach Hydrolyse bzw. Kondensationsgrad wird zwischen T°-, T¹-, T²-, T³- und Q⁰-, Q¹-, Q²-, Q³- und Q⁴-Gruppen unterschieden. Je nach Verteilung der einzelnen T- und Q-Gruppen kann ein überwiegend lineares mehr oder weniger quervernetztes dreidimensionales Netzwerk erzeugt werden. Durch Variation der Syntheseparameter kann die T- und Q-Gruppen-Verteilung eingestellt werden. So können Eigenschaften der erfindungsgemäßen dekorativen Schichten, wie beispielsweise Dichtigkeit, Neigung zu Verfärbungen und Topfzeiten eingestellt werden. Beispielsweise können temperaturstabile Methyl-Gruppen auch bei hohen Temperaturen (T=500°C) eine Dichtigkeit gegenüber wässrigen und öligen Medien gewährleisten.

Bei Herstellung der Sol-Gel-Vorstufe kann zunächst mit erstem und weiterem Silan, sowie den anorganischen Partikeln ein vernetztes Sol-Gel-Materialhergestellt werden. Sodann wird das hoch siedende Lösungsmittel hinzugegeben.

Um ein siebdruckfähiges Sol-Gel-Bindemittel herzustellen werden teilweise und/oder alle niedrig siedenden Bestandteile, im speziellen Alkohol und/oder Wasser vor oder nach Zugabe des hoch siedenden Lösungsmittels zu einem Anteil von 40-100 %, bevorzugt 60 - 100 %, ganz besonders bevorzugt 60-90 % entfernt.

Dabei hat sich erstaunlicherweise gezeigt, dass obwohl noch leichtflüchtige Lösungsmittelanteil enthalten sind, trotzdem eine gute Siebdruckfähigkeit gewährleistet ist.

Im Folgenden wird unter flüssiger Phase der Anteil an hoch siedendem Lösungsmittel und leichtflüchtigem Lösungsmittel verstanden. Unter Feststoffanteil wird der Anteil an vernetztem Si-basiertem Methyl- und oder Phenylgruppenfunktionalierten Sol-Gel-Material, unkondensierten Silanen und para-Toluolsulfonsäure verstanden.

In einer bevorzugten Ausführungsform des Sol-Gel-Bindemittels besteht die flüssige Phase vorzugsweise zu 80 bis 100 % aus hoch siedendem Lösungsmittel.

Der Restgehalt an bei der Sol-Gel-Reaktion freigesetzten Lösungsmitteln an der flüssigen Phase liegt vorzugsweise bei unter 20 %, besonders bevorzugt bei unter 10 %.

Vorzugsweise wird der Sol-Gel-Binder mit einem Feststoffgehalt von 35 - 55 %, bevorzugt 35-50 %, besonders bevorzugt 40 - 50 % und dementsprechend einem Flüssigkeitsanteil von 45 - 65 %, bevorzugt 50-65 %, besonders bevorzugt 50 - 60 % hergestellt.

Vorzugsweise setzt sich der Feststoffanteil im Sol-Gel-Binder aus 50 - 95 Masse-% Si-basiertem Methyl und oder Phenylgruppen funktionalierten Sol-Gel-Material versetzt mit 3 - 10 Masse-% nanoskaligen Füllstoffpartikeln und 2-7 Masse-% para-Toluolsulfonsäure zusammen.

In einer Ausführungsform kann dem Sol-Gel-Bindemittel ein temperaturstabiles Phenyl- und oder Methylfunktionalisiertes Siloxanharz und oder Silsesquisiloxanharz als zusätzlicher Binder zugeben werden. Das Harz kann 0 - 50 Masse-% des Feststoffanteils des Gesamtbindemittelanteils ausmachen.

Die Viskosität des Bindemittels liegt vorzugsweise zwischen 5 und 50 mPa·s, bevorzugt 5 und 35 mPa·s, besonders bevorzugt 5 und 20 mPa·s. Bevorzugt weist das Sol-Gel-Bindemittel newtonsches oder strukturviskoses Verhalten, besonders bevorzugt newtonsches Verhalten auf.

Es sollte ein Bindemittel verwendet werden, bei dem die Temperaturstabilität der Methylgruppen bei mindestens 500°C liegt.

Hierdurch wird gewährleistet, dass der VOC-Anteil im Anwendungsfall Verwendung als Kochfeld minimal ist.

Durch Variation der Massenanteile der einzelnen Komponenten kann die Rheologie der pigmentierten Farbe eingestellt werden, um diese insbesondere als Paste für ein Siebdruckverfahren zu verwenden.

Die Viskosität der pigmentierten Farbe liegt vorzugsweise zwischen 1000 - 5000 mPa_{·}s.

Vorzugsweise wird das Sol auf einen ROR-Wert (Stoffmengenverhältnis von Wasser zu hydrolysierbaren Gruppen) von unter 0,45, besonders bevorzugt von unter 0,4, eingestellt.

Die Erfinder haben herausgefunden, dass durch eine Verringerung des ROR-Wertes die Topfzeit des Sol-Gel-Bindemittel und der hiermit hergestellten pigmentierten Sol-Gel-Farbe um ein vielfaches erhöht werden kann.

Bei einer Ausführungsform der Erfindung wird eine Sol-Gel-Farbe mit einem Sol-Gel-Bindemittel bereitgestellt, welches auf einem Sol-Gel-Netzwerk basiert mit einem Verhältnis von tertiären zu quartären Gruppen von 2 bis 6, vorzugsweise 3 bis 5, besonders bevorzugt von 3,5 bis 4,5.

Die Farbe enthält ein vernetztes Sol-Gel-Bindemittel mit einem Kondensationsgrad von unter 90 %, welches eine Viskosität zwischen 10 und 100 mPa·s aufweist.

Durch die Erfindung konnte ein Sol-Gel-Bindemittel bereitgestellt werden, bei der die Viskosität von 10 bis 100 mPa·s bei einer Lagerung bei Raumtemperatur über einen Zeitraum von über 10 Wochen, vorzugsweise von über 15 Wochen und besonders bevorzugt von über 20 Wochen, erhalten bleibt.

Das Sol-Gel-Bindemittel und die hiermit hergestellte pigmentierte Sol-Gel-Farbe enthält ein Lösungsmittel mit einem Siedepunkt größer als 120°C.

Durch die Erfindung konnte eine Sol-Gel basierte Farbe bereitgestellt werden, welche im Wesentlichen frei von Polysiloxanharz, insbesondere ein Polysiloxananteil von weniger als 5 % aufweist.

Im getrockneten Zustand liegen die Sekundärpartikel der irregulären Partikel als Trocknungsagglomerate vor, bei denen die fraktale Dimension niedriger ist. Diese beträgt zwischen 1,0 und 2,0, bevorzugt zwischen 1,5 und 2,0 und besonders bevorzugt zwischen 1,7 und 2,0.

Die erfindungsgemäße Farbe wird bei einer bevorzugten Ausführungsform der Erfindung verwendet, um im Siebdruckverfahren einen Gegenstand zu bedrucken.

Insbesondere ist die Sol-Gel-Farbe zur Unterseitenbeschichtung einer Glaskeramikplatte, insbesondere eines Kochfeldes, vorgesehen.

Besonders geeignet ist die Sol-Gel-Farbe zur Herstellung einer oberseitig und/oder unterseitig dekorierten Kochfläche für Induktion und/oder Gasanwendungen.

Insbesondere ist die Sol-Gel-Farbe zur Beschichtung von Kochflächen geeignet, welche zusätzlich eine transparente Aussparung für Displayfenster aufweisen und oder eingefärbte und oder pigmentierte semitransparente Schichten für LED Displays aufweisen, herzustellen.

In einer speziellen Ausführungsform werden hierfür als transparente Substrate Glas-, Glaskeramik- oder Keramiksubstrate mit einem thermischen Längenausdehnungskoeffizienten von 0 - 4,5 ^{∗} 10⁻⁶ K⁻¹ verwendet.

Durch die Erfindung kann eine Farbe bereitgestellt werden, die ohne den Zusatz von Polysiloxan mindestens 6 Monate haltbar ist.

Es ist weiter möglich, auf die Farbe eine Versiegelungsschicht aufzubringen. Diese kann beispielsweise zwischen 230 und 450°C eingebrannt werden.

Als Versiegelungsschicht kann beispielsweise eine Sol-Gel-Schicht aufgebracht werden. Weiter kann insbesondere eine pigmentierte Sol-Gel-Schicht oder eine Silikonfarbe aufgebracht werden. Weiter können Versiegelungsschichten auf Basis von Methyl-Phenyl oder Methyl/Phenyl-Silikonharz verwendet werden.

Die prozentualen Anteile der T- und Q-Gruppen im Sol-Gel-Bindemittel stehen vorzugsweise in folgendem Verhältnis: T₃/(T₂+T₁+T₀) beträgt bevorzugt 0,2-2,0, besonders bevorzugt 0,2-1,0. (Q₄+Q₃)/(Q₂+Q₁+Q₀) beträgt bevorzugt 0,3-3,0, besonders bevorzugt 0,3-1,0.

Weiter gilt vorzugsweise für das hybridpolymere Netzwerk T₃/(T₂+T₁+T₀) < (Q₄+Q₃)/(Q₂+Q₁+Q₀).

Zur Herstellung einer erfindungsgemäßen Farbe kann als erstes hydrolysierbares Silan beispielsweise MTEOS (Methyltrietoxysilan) und als weiteres hydrolysierbares Silan TEOS (Tetraethylorthosilicat) verwendet werden.

Beim MTEOS/TEOS-Verhältnis von etwa 4 konnte eine Topfzeit des Sol-Gel-Bindemittels von über 10 Monaten erzielt werden.

### Beschreibung der Zeichnungen

Der Gegenstand der Erfindung soll im Folgenden Bezug nehmend auf schematisch dargestellte Ausführungsbeispiele anhand der Zeichnungen und näher erläutert werden.

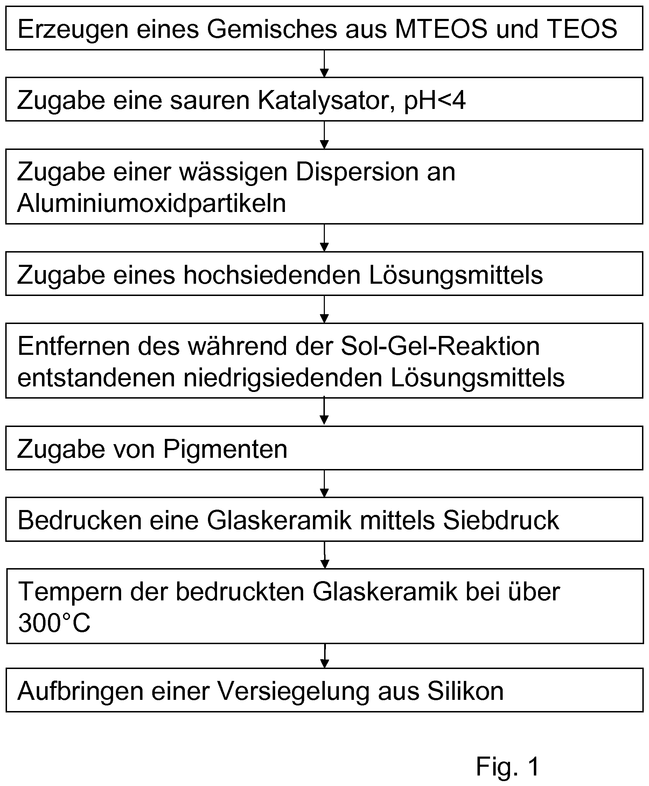

Fig. 1 zeigt ein Flussdiagramm eines Ausführungsbeispiels eines Verfahrens zur Herstellung einer erfindungsgemäßen Sol-Gel-Farbe.

Zunächst wird ein Gemisch aus MTEOS und TEOS vorgelegt.

Anschließend wird mit einem sauren Katalysator der pH-Wert des Gemisches auf unter 4 eingestellt.

Als Füllpartikel wird eine wässrige Dispersion an Aluminiumoxidpartikeln hinzu gegeben. Es bildet sich nunmehr durch Hydrolyse und Kondensation von MTEOS und TEOS ein Sol-Gel-Netzwerk, dessen Vernetzungsgrad über den ROR-Wert und das Verhältnis von MTEOS zu TEOS gesteuert wird.

Nach Erreichen des gewünschten Kondensationsgrades wird ein hoch siedendes Lösungsmittel hinzu gegeben.

Das während der Sol-Gel-Reaktion entstandene niedrig siedende Lösungsmittel kann sodann entfernt werden, so dass ein Lösungsmittelaustausch stattgefunden hat.

Weiter werden Pigmente der Farbe zugegeben.

Die Farbe kann sodann verwendet werden, um mittels Siebdruck eine Glaskeramik zu bedrucken.

Die bedruckte Glaskeramik kann bei über 300°C getempert werden, dabei kann die Temperatur derart erhöht werden, dass organische Bestandteile der Sol-Gel-Farbe überwiegend entfernt werden.

Schließlich kann eine Versiegelungsschicht aus Silikon aufgebracht werden.

Im Detail kann eine Sol-Gel-Farbe gemäß folgenden Ausführungsbeispielen hergestellt und weiter verarbeitet werden:

### Beispiel 1:

Zur Synthese der Sol-Gel-Vorstufe werden MTEOS und TEOS in einem molaren Verhältnis von beispielsweise 4/1 vorgelegt und durch Zugabe von Säure, insbesondere para-Toluolsulfonsäure ein pH-Wert von ca. 2 eingestellt.

Anschließend wird unter starkem Rühren eine 30 % wässrige Dispersion mit Al₂O₃-Partikeln (30 % Feststoffanteil) (Durchmesser ∼ 120 nm) hinzugegeben. Der ROR-Wert liegt bei 0,425.

Zur Synthese der Matrix wird die Sol-Gel-Vorstufe mit einem Kondensationsgrad von 85 % und einem T₃/(T₂+T₁+T₀)-Verhältnis von ca. 1,8 und einem (Q₄+Q₃)/(Q₂+Q₁+Q₀)-Verhältnis von ca. 3,0 mit einem Lösungsmittelgemisch aus Terpineol und n-Butylacetat im Verhältnis von beispielsweise 4/1 vereint.

Hierbei liegt der Lösungsmittelanteil beispielsweise bei 40 %. Nach Entfernen des Ethanols erhält man das Sol-Gel-Bindemittel mit einem T3-Gruppen-Anteil von ca. 55 % und Q⁴-Gruppen-Anteil von ca. 10 %. Der Kondensationsgrad liegt über einen Zeitraum von sechs Monaten unter Lagerung bei 7 °C bei ca. 90±5 %.

Zur Synthese der Farbe werden Matrix (60 - 65 %), DEGMEE (Diethylenglycolmonoethylether) (ca. 9 %), Glimmerpigmente (ca. 24 %), Graphit (5 %) und Hilfs- bzw. Anpaststoffe (ca. 2 %) verrührt.

Über den Siebdruck mittels eines 77er Siebes wird eine dekorgebende Schicht auf das Substrat aufgebracht und anschließend bei 450°C getempert.

Anschließend wird die Beschichtung mit einer Methyl/Phenylsilikonversiegelung, u.a. pigmentiert mit Glimmer und Graphit, versiegelt. Die Beschichtung wird bei 400°C getrocknet.

### Beispiel 2:

Zur Synthese des Trisols werden MTEOS und TEOS in einem molaren Verhältnis von beispielsweise 4/1 vorgelegt und durch Zugabe von para-Toluolsulfonsäure auf einen pH-Wert von ca. 2 eingestellt. Anschließend wird unter starkem Rühren eine 30 % wässrige Dispersion mit Al₂O₃-Partikeln hinzugegeben. Der ROR-Wert liegt bei 0,375.

Zur Synthese der Matrix wird die Sol-Gel-Vorstufe mit einem Kondensationsgrad von 76 % und einem T₃/(T₂+T₁+T₀)-Verhältnis von ca. 1, 0 und einem (Q₄+Q₃)/(Q₂+Q₁+Q₀)-Verhältnis von ca. 1,5 mit einem Lösungsmittelgemisch aus Terpineol und n-Butylacetat im Verhältnis von beispielsweise 4/1 vereint.

Hierbei liegt der Lösungsmittelanteil beispielsweise bei 40 %. Nach Entfernen des Ethanols erhält man ein Sol-Gel-Bindemittel mit einem T³-Gruppenanteil von ca. 45 % und Q⁴-Gruppenanteil von ca. 5 - 7 %. Der Kondensationsgrad liegt bei ca. 78 %. Der Kondensationsgrad bleibt unter Lagerung bei 7°C sechs Monate unter 85 %, das Bindemittel vergelt nicht.

Zur Synthese der Farbe werden Matrix (60 - 65 %), DEGMEE (ca. 9 %), Glimmerpigmente mit einer Größe von 15 µm (ca. 20 %),synthetischem Graphit mit einer Größe von 5 µm (9 %) und Hilfs- bzw. Anpaststoffe (ca. 2 %) verrührt.

Über den Siebdruck mittels eines 77er Siebes wird eine dekorgebende Schicht auf das Substrat aufgebracht und anschließend bei 450°C getempert.

Anschließend wird die Beschichtung mit einer Methyl-/Phenylsilikonversiegelung, u.a. pigmentiert mit beschichtetem Glimmer und Graphit, versiegelt. Die Beschichtung wird bei 400°C getrocknet.

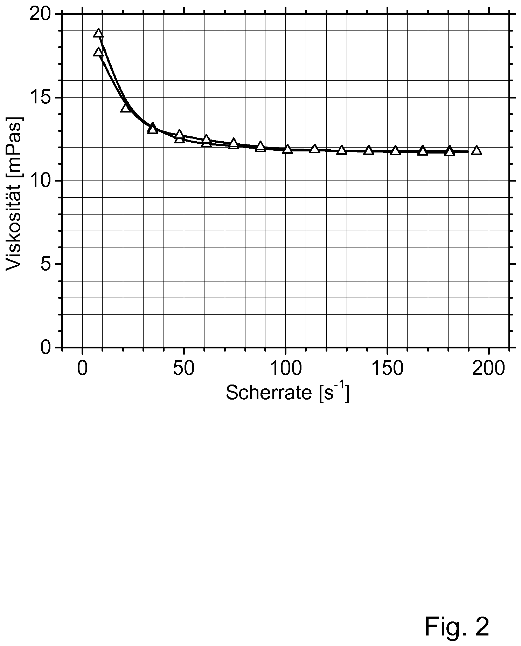

Fig. 2 zeigt die Viskosität eines erfindungsgemäßen Sol-Gel-Bindemittels nach einer Woche. Auf der x-Achse ist die Scherrate in s⁻¹, auf der y-Achse die Viskosität in mPa·s angegeben.

Zu erkennen ist, dass die Viskosität mit steigender Drehzahl sinkt, die Farbe ist also strukturviskos und lässt sich gut via Siebdruck applizieren.

Durch die Einlagerung von Lösungsmittelmolekülen in die freien Zwischenräume des Sol-Gel-Netzwerks tritt bei geringen Scherraten (<20 s⁻¹) ein schwacher thixotroper Effekt auf.

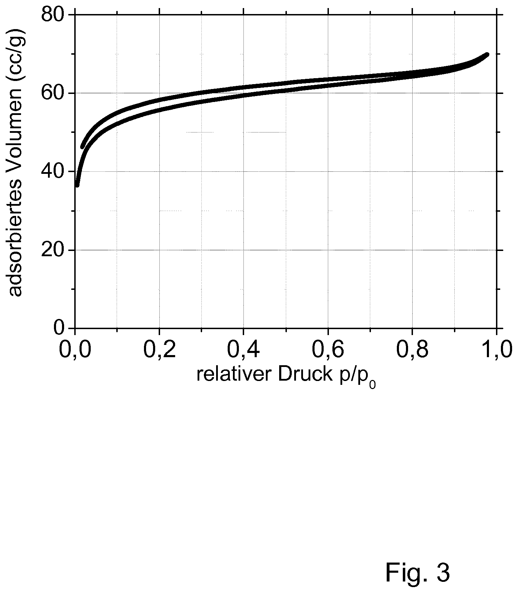

Fig. 3 zeigt die Stickstoffsorptionsisotherme einer pigmentierten Schicht nach Einbrand bei 450°C Auf der x-Achse ist der relative Druck in p/p₀ und auf der Y-Achse das adsorbierte Volumen in cm³/g aufgetragen. Die Stickstoffsorptionsisotherme weist einen nach IUPAC klassifizierten Typ I-Verlauf auf, welcher charakteristisch für Mikroporen (d<2 nm) ist. Gleichzeitig weist die Stickstoffsorptionsisotherme Indizien für einen Typ IV-Verlauf auf, welcher typischerweise bei Mesoporen (d>2 nm)auftritt. Demnach liegt eine bimodale Porenverteilung im Schichtsystem vor.

Durch Variation des ROR-Wertes lässt sich die spezifische Oberfläche der Schichten gezielt einstellen.

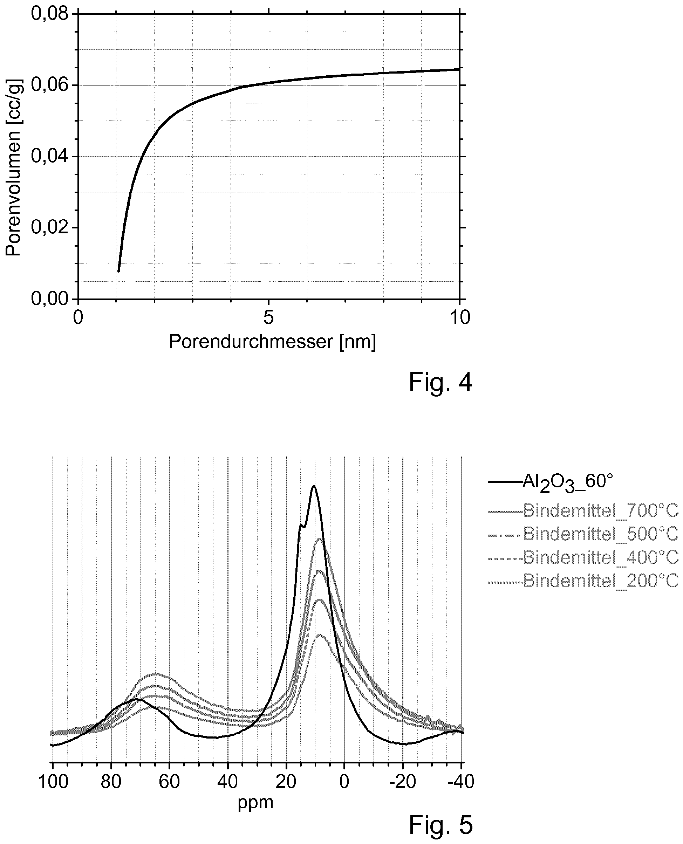

Fig. 4 zeigt die Porenvolumenverteilung einer pigmentierten Schicht nach Einbrand bei 450°C in Abhängigkeit des ROR-Wertes des für die Farbherstellung verwendeten Sol-Gel-Bindemittels.

Auf der x-Achse ist der Porendurchmesser in Nanometer und auf der y-Achse das Porenvolumen in cm³/g aufgetragen. Der Kurvenverlauf bestätigt eine bimodale Porenverteilung. Ca. 2/3 des Porenvolumens ist auf Mikroporen, ca. 1/3 auf Mesoporen zurückzuführen.

Zeichnung Fig.5 zeigt Al-NMR-Messungen der eingesetzten, bei 60°C getrockneten, reinen Aluminiumoxidpartikel und des Sol-Gel-Bindemittels in Abhängigkeit der Einbrandtemperatur.

Zu erkennen ist, dass die reinen Aluminiumoxidpartikel im Wesentlichen aus tetragonal und überwiegend hexagonal koordiniertem Aluminium bestehen.

Das Sol-Gel-Bindemittel weist ab einer Einbrandtemperatur von 200°C überwiegend hexagonal koordiniertes Aluminium und einen geringen Anteil an tetragonal koordiniertem Aluminium auf.

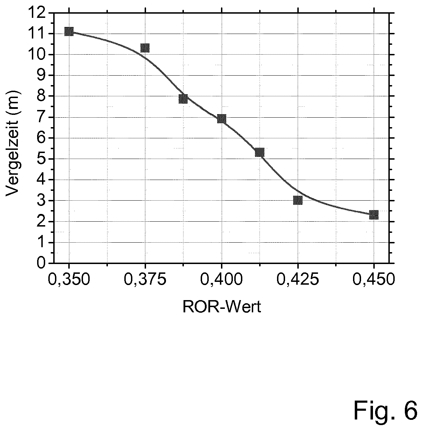

Fig. 6 zeigt die Vergelzeiten des Sol-Gel-Bindemittels in Abhängigkeit des ROR-Wertes. Auf der x-Achse ist der ROR-Wert des Sol-Gel-Bindemittels und auf der y-Achse die entsprechende Vergelzeit in Monaten aufgetragen. Mit abnehmendem ROR-Wert nimmt die Vergelzeit bzw. Topfzeit des Bindemittels deutlich zu.

Fig. 7 zeigt das Ergebnis einer dynamischen Lichtstreuungsmessung einer 3,3 x 10⁻⁵ %igen Dispersion von flammpyrolytisch hergestelltm nanoskaligem Al₂O₃ in Wasser.

Diese Partikel können beispielsweise bei der Herstellung der Sol-Gel Farbe zugesetzt werden.

Die Messung mittels dynamischer Lichtstreuung gibt den Durchmesser der Sekundärpartikel wieder.

Auf der x-Achse ist der Durchmesser in Nanometern und auf der y- Achse ist der Volumenanteil wiedergegeben. Zu erkennen ist, dass der Durchmesser im Wesentlichen von etwa 50 Nanometer bis etwa 300 Nanometer verteilt ist. d₅₀ beträgt 115 Nanometer.

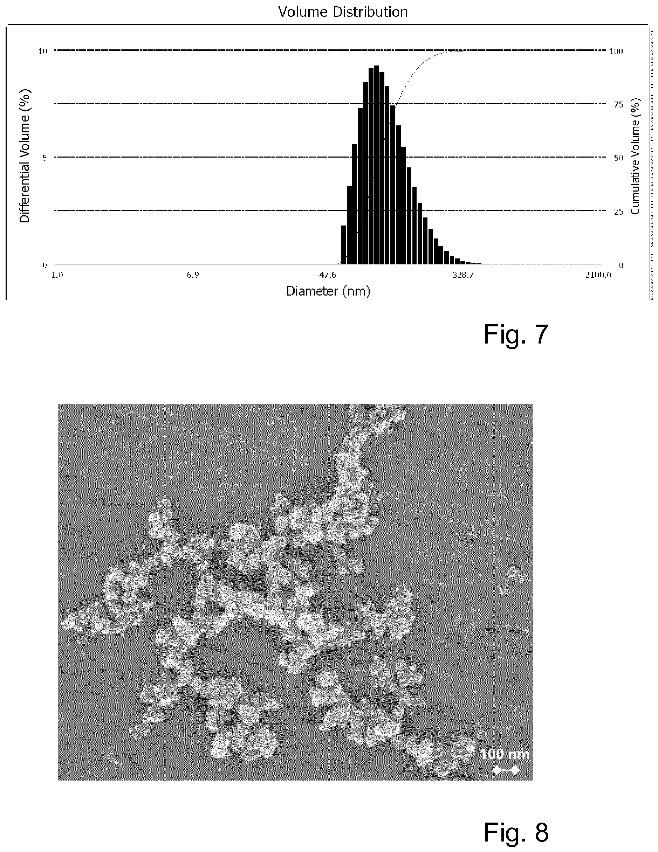

Fig. 8 zeigt eine REM Aufnahme einer verdünnten Dispersion, welche auf einen Träger aufgetropft und anschließend getrocknet wurde.

Die REM Aufnahme zeigt Trocknungsagglomerate, bei denen die Sekundärpartikel agglomeriert sind.

Diese Trocknungsagglomerate können redispergiert werden, wohingegen die Sekundärpartikel stabil sind.

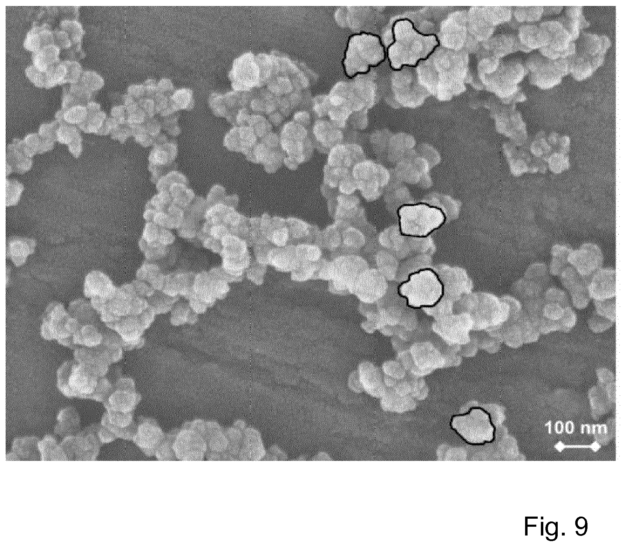

Fig. 9 zeigt eine weitere REM Aufnahme, bei der einige Sekundärpartikel schwarz umrandet sind.

Der Primärpartikeldurchmesser beträgt etwa 10-80 Nanometer. Diese Primärpartikel sind zu Sekundärpartikeln agglomeriert mit d₅₀ = 150 Nanometer. Die Größe der Trocknungsagglomerate beträgt über 200 Nanometer.

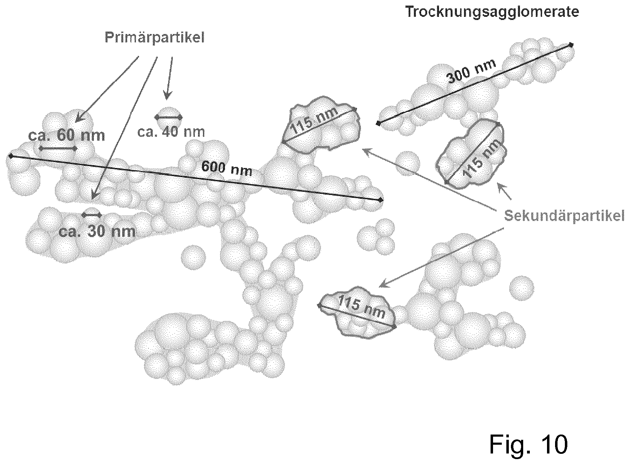

Fig. 10 zeigt eine schematische Darstellung, in der die Primärpartikel, die hier einen Durchmesser zwischen 30 und 60 Nanometer aufweisen, gekennzeichnet sind. Weiter sind Sekundärpartikel entlang ihrer größten Ausbreitungsrichtung vermessen. Diese sind etwa 115 Nanometer groß. Die Trocknungsagglomerate sind wesentlich größer, und zwar bis 600 Nanometer.

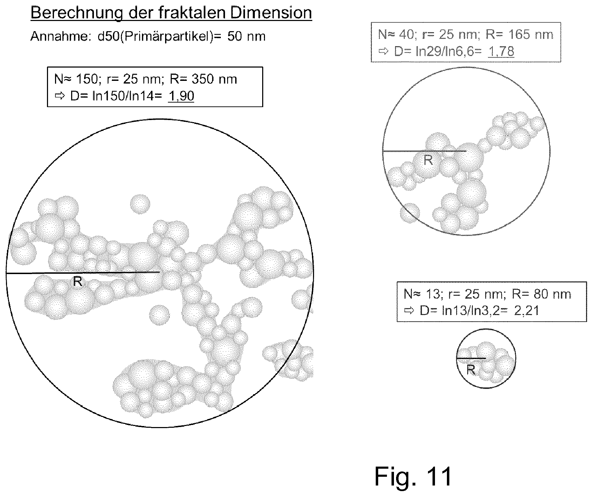

Bezug nehmend auf Fig. 11 soll die Berechnung der fraktalen Dimension nach Mandelbrot näher erläutert werden. Die fraktale Dimension wird anhand von REM Untersuchungen bestimmt. Hierbei werden die Sekundärpartikel dreidimensional betrachtet. Es werden mindestens 10 zufällig gewählte Sekundärpartikel aufgenommen und deren fraktale Dimension bestimmt. Aus diesen Messungen wird der Mittelwert gebildet.

Die fraktale Dimension wird mit folgender Formel berechnet:
Fraktale Dimension D = ln N/ln(R/r), wobei N die Anzahl der Primärpartikel, r der Radius der Primärpartikel und R der Radius des Sekundärpartikels ist.

In Fig. 11 sind drei beispielhafte Sekundärpartikel dargestellt, bei denen die fraktale Dimension die Werte 1,78, 1,9 und 2,21 annimmt.

Die Erfindung bezieht sich auf eine Sol-Gel-Farbe bei der vorzugsweise die Hälfte der Sekundärpartikel eine fraktale Dimension von 2,0 - 2,5 aufweist.

Bei der getrockneten Farbe bilden sich Trocknungsagglomerate mit einer niedrigeren fraktalen Dimension, insbesondere im Bereich von 1,7 - 2,0.

## Patentansprüche

1. Verfahren zur Herstellung einer Sol-Gel-Farbe zur Verarbeitung mittels Siebdruck, wobei ein erstes hydrolysierbares Silan RₙSiX₍₄₋ₙ₎ und ein weiteres hydrolysierbares Silan SiX₄, wobei R ein aliphatischer oder aromatischer Rest und X eine hydrolytisch abspaltbare Gruppe ist, ein Lösungsmittel mit einem Siedepunkt größer 120°C, anorganische irregulär geformte Partikel als Füllstoff als Dispersion gemischt werden, und wobei das Sol auf einen ROR-Wert, also ein Stoffmengenverhältnis von Wasser zu hydrolysierbaren Gruppen, von unter 0,45 eingestellt wird,
wobei zunächst mit dem erstem und dem weiteren Silan sowie den anorganischen Partikeln eine vernetzte Sol-Gel-Vorstufe hergestellt wird, wobei leichtflüchtige Lösungsmittel, welche bei der Hydrolyse und Kondensation der Sol-Gel-Vorstufe entstehen, entfernt werden und wobei sodann das Lösungsmittel mit einem Siedepunkt größer 120°C zugegeben wird und wobei Pigmente zugegeben werden.

2. Verfahren zur Herstellung einer Sol-Gel-Farbe nach dem vorstehenden Anspruch, **dadurch gekennzeichnet, dass** als irregulär geformte Partikel aus aggregierten Primärpartikeln gebildete Sekundärpartikel verwendet werden.

3. Verfahren zur Herstellung einer Sol-Gel-Farbe nach dem vorstehenden Anspruch, **dadurch gekennzeichnet, dass** die Primärpartikel eine mittlere Partikelgröße zwischen 10 und 80 nm aufweisen.

4. Verfahren zur Herstellung einer Sol-Gel-Farbe nach einem der vorstehenden beiden Ansprüche, **dadurch gekennzeichnet, dass** die Sekundärpartikel eine mittlere Partikelgröße entlang der Richtung ihrer größten Ausbreitung von im Mittel mehr als 100 nm aufweisen.

5. Verfahren zur Herstellung einer Sol-Gel-Farbe nach einem der vorstehenden Ansprüche, **dadurch gekennzeichnet, dass** zumindest die irregulär geformten Sekundärpartikel eine fraktale Dimension von 1,5 bis 3,0, bevorzugt von 2,0 bis 3,0 und besonders bevorzugt von 2,0 bis 2,5 aufweisen.

6. Verfahren zur Herstellung einer Sol-Gel-Farbe nach dem vorstehenden Anspruch, **dadurch gekennzeichnet, dass** in einem Verhältnis von RₙSiX₍₄₋ₙ₎ zu SiX₄ zwischen 2 und 6 liegt.

7. Verfahren zur Herstellung einer Sol-Gel-Farbe nach einem der vorstehenden Ansprüche, **dadurch gekennzeichnet, dass** es sich bei dem ersten hydrolysierbaren Silan um ein quartäres Silan RSiX₃ handelt.

8. Verfahren zur Herstellung einer Sol-Gel-Farbe nach einem der vorstehenden Ansprüche, **dadurch gekennzeichnet, dass** als anorganische Partikel Aluminiumoxidpartikel verwendet werden.

9. Verfahren zur Herstellung einer Sol-Gel-Farbe nach einem der vorstehenden Ansprüche, **dadurch gekennzeichnet, dass** ein saurer Katalysator hinzugegeben wird, insbesondere, dass die Sol-Gel-Vorstufe einen pH-Wert von weniger als 4 aufweist.

10. Verfahren zur Herstellung einer Sol-Gel-Farbe nach einem der vorstehenden Ansprüche, **dadurch gekennzeichnet, dass** das Sol auf einen ROR-Wert von unter 0,4 eingestellt wird.

11. Sol-Gel-Farbe, herstellbar, insbesondere hergestellt mit einem Verfahren nach einem der vorstehenden Ansprüche.

12. Sol-Gel-Farbe nach dem vorstehenden Anspruch, **dadurch gekennzeichnet, dass** die Sol-Gel-Farbe zumindest eines der folgenden Merkmale aufweist:
- der Gesamtkondensationsgrad des Sol-Gel-Bindemittels liegt zwischen 70 und 95 %, vorzugsweise zwischen 70 und 90 % und besonders bevorzugt zwischen 70 und 80 %;
- das Verhältnis an tertiärem zu quartärem Silan liegt bei 2/1 bis 6/1
- die Sol-Gel-Farbe enthält ein methyl- und/oder phenylfunktionalisiertes Sol-Gel-Bindemittel mit anorganischen Füllstoffpartikeln;
- die Sol-Gel-Farbe enthält ein Lösungsmittel mit einem Siedepunkt größer 120 °C und einer Verdunstungszahl größer 10;
- die Sol-Gel-Farbe enthält anorganische, plättchenförmige oder nicht plättchenförmige Pigmente sowie Graphit zur Farbanpastung.

13. Sol-Gel-Farbe nach einem der vorstehenden Ansprüche, **dadurch gekennzeichnet, dass** die Farbe in getrocknetem Zustand Trocknungsagglomerate der irregulär geformten Partikel mit einer fraktalen Dimension zwischen 1,0 und 2,0, bevorzugt zwischen 1,5 und 2,0 und besonders bevorzugt zwischen 1,7 und 2,0 enthält.

14. Sol-Gel-Farbe nach einem der vorstehenden Ansprüche, **dadurch gekennzeichnet, dass** die Farbe im Wesentlichen frei von Polysiloxanharz ist, insbesondere weniger als 5 % Polysiloxanharz aufweist.

15. Sol-Gel-Farbe nach einem der vorstehenden Ansprüche, **dadurch gekennzeichnet, dass** die Farbe ein Sol-Gel-Netzwerk enthält, deren T₃/(T₂+T₁+T₀)-Verhältnis bevorzugt 0,2-2,0, besonders bevorzugt 0,2-1,0 beträgt und deren (Q₄+Q₃)/(Q₂+Q₁+Q₀) -Verhältnis bevorzugt 0,3-3,0 und besonders bevorzugt 0,3-1,0 beträgt.

16. Sol-Gel-Farbe nach einem der vorstehenden Ansprüche, welche ein vernetztes Sol-Gel-Bindemittel mit einem Kondensationsgrad von unter 90 % enthält, eine Viskosität von 10 und 100 mPa·s aufweist und anorganische Partikel enthält.

17. Sol-Gel-Farbe nach dem vorstehenden Anspruch, **dadurch gekennzeichnet, dass** die Viskosität von 10 bis 5000 mPa·s bei einer Lagerung bei Raumtemperatur über 10 Wochen, vorzugsweise über 15 Wochen und besonders bevorzugt über 25 Wochen, erhalten bleibt.

18. Verwendung einer Sol-Gel-Farbe nach einem der vorstehenden Ansprüche als zur Bedruckung eines Gegenstands im Siebdruckverfahren.

19. Verwendung einer Sol-Gel-Farbe nach einem der vorstehenden Ansprüche zur Unterseitenbeschichtung einer Glaskeramikplatte, insbesondere eines Kochfeldes, ganz besonders eines Induktions- oder Gaskochfeldes.

## Claims

1. A method for producing a sol-gel ink to be processed by screen printing, comprising mixing a first hydrolysable silane RₙSiX₍₄₋ₙ₎ and a further hydrolysable silane SiX₄, wherein R is an aliphatic or aromatic radical and X is a hydrolytically cleavable group, a solvent having a boiling point above 120 °C, inorganic irregularly shaped particles as a filler to form a dispersion, and wherein the sol is adjusted to an ROR value which is a molar ratio of water to hydrolysable groups of less than 0.45;
wherein initially a crosslinked sol-gel precursor is prepared using the first silane and the further silane and the inorganic particles, wherein volatile solvents arising during hydrolysis and condensation of the sol-gel precursor are removed, and wherein then the solvent having a boiling point above 120 °C is added, and wherein pigments are added.

2. The method for producing a sol-gel ink according to the preceding claim, **characterised in that** secondary particles formed from aggregated primary particles are used as the irregularly shaped particles.

3. The method for producing a sol-gel ink according to the preceding claim, **characterised in that** the primary particles have a mean particle size between 10 and 80 nm.

4. The method for producing a sol-gel ink according to any one of the two preceding claims, **characterised in that** the secondary particles have a mean particle size along the direction of their greatest dimension of more than 100 nm on average.

5. The method for producing a sol-gel ink according to any one of the preceding claims, **characterised in that** at least the irregularly shaped secondary particles have a fractal dimension from 1.5 to 3.0, preferably from 2.0 to 3.0, and more preferably from 2.0 to 2.5.

6. The method for producing a sol-gel ink according to the preceding claim, **characterised in that** a ratio of RₙSiX₍₄₋ₙ₎ to SiX₄ is between 2 and 6.

7. The method for producing a sol-gel ink according to any one of the preceding claims, **characterised in that** the first hydrolysable silane is a quaternary silane RSiX₃.

8. The method for producing a sol-gel ink according to any one of the preceding claims, **characterised in that** aluminium oxide particles are used as the inorganic particles.

9. The method for producing a sol-gel ink according to any one of the preceding claims, **characterised in that** an acidic catalyst is added, in particular **in that** the sol-gel precursor has a pH of less than 4.

10. The method for producing a sol-gel ink according to any one of the preceding claims, **characterised in that** the sol is adjusted to an ROR value of less than 0.4.

11. A sol-gel ink, producible, in particular produced by a method according to any one of the preceding claims.

12. The sol-gel ink according to the preceding claim, **characterised in that** the sol-gel ink has at least one of the following features:
- the total degree of condensation of the sol-gel binder is between 70 and 95 %, preferably between 70 and 90 %, and more preferably between 70 and 80 %;
- the ratio of tertiary to quaternary silane is from 2:1 to 6:1;
- the sol-gel ink includes a methyl- and/or phenyl-functionalized sol-gel binder with inorganic filler particles;
- the sol-gel ink includes a solvent having a boiling point above 120 °C and an evaporation rate of greater than 10;
- the sol-gel ink includes inorganic platelet-shaped or non-platelet-shaped pigments and graphite for pasting of the ink.

13. The sol-gel ink according to any one of the preceding claims, **characterised in that**, in its dried state, the ink contains dried agglomerates of the irregularly shaped particles, which have a fractal dimension between 1.0 and 2.0, preferably between 1.5 and 2.0, and more preferably between 1.7 and 2.0.

14. The sol-gel ink according to any one of the preceding claims, **characterised in that** the ink is substantially free of polysiloxane resin, in particular including less than 5 % of polysiloxane resin.

15. The sol-gel ink according to any one of the preceding claims, **characterised in that** the ink comprises a sol-gel network with a T₃/(T₂+T₁+T₀) ratio preferably from 0.2 to 2.0, more preferably from 0.2 to 1.0, and with a (Q₄+Q₃)/(Q₂+Q₁+Q₀) ratio preferably from 0.3 to 3.0 and more preferably from 0.3 to 1.0.

16. The sol-gel ink according to any one of the preceding claims, comprising a crosslinked sol-gel binder that has a degree of condensation of less than 90 %, a viscosity from 10 to 100 mPa·s, and that includes inorganic particles.

17. The sol-gel ink according to the preceding claim, **characterised in that**, when stored at room temperature, the viscosity from 10 to 5000 mPa·s is preserved for 10 weeks, preferably for 15 weeks, and most preferably for 25 weeks.

18. Use of a sol-gel ink according to any one of the preceding claims for printing on an item in a screen printing process.

19. Use of a sol-gel ink according to any one of the preceding claims for coating a lower surface of a glass ceramic plate, in particular of a cooktop, more particularly of an induction or gas cooktop.

## Revendications

1. Procédé de fabrication d'une encre sol-gel destinée à une mise en œuvre par impression par sérigraphie, selon lequel un premier silane hydrolysable RₙSiX₍₄₋ₙ₎ et un autre silane hydrolysable SiX₄, où R est un reste aliphatique ou aromatique et X est un groupe pouvant être séparé par hydrolyse, un solvant avec un point d'ébullition supérieur à 120 °C, des particules inorganiques de forme irrégulière, en tant que charge, sont mélangés pour obtenir une dispersion, et selon lequel le sol est réglé à une valeur ROR, c'est-à-dire un rapport molaire entre l'eau et des groupes hydrolysables, de moins de 0,45, sachant que l'on réalise d'abord un précurseur sol-gel réticulé à l'aide du premier et du deuxième silane et des particules inorganiques, opération lors de laquelle on élimine les solvants très volatils qui sont formés lors de l'hydrolyse et de la condensation du précurseur sol-gel, et on ajoute ensuite le solvant ayant un point d'ébullition supérieur à 120 °C et on ajoute des pigments.

2. Procédé de fabrication d'une encre sol-gel selon la revendication précédente, **caractérisé en ce que** l'on utilise en tant que particules de forme irrégulière, des particules secondaires formés à partir de particules primaires agrégées.

3. Procédé de fabrication d'une encre sol-gel selon la revendication précédente, **caractérisé en ce que** les particules primaires présentent une grosseur de particule moyenne qui est comprise entre 10 et 80 nm.

4. Procédé de fabrication d'une encre sol-gel selon l'une des deux revendications précédentes, **caractérisé en ce que** les particules secondaires présentent, le long de la direction de leur étendue maximale, une grosseur de particule moyenne qui est en moyenne supérieure à 100 nm.

5. Procédé de fabrication d'une encre sol-gel selon l'une des revendications précédentes, **caractérisé en ce qu'**au moins les particules secondaires de forme irrégulière présentent une dimension fractale allant de 1,5 à 3,0, de préférence de 2,0 à 3,0, et de façon particulièrement avantageuse de 2,0 à 2,5.

6. Procédé de fabrication d'une encre sol-gel selon la revendication précédente, **caractérisé en ce que** le rapport entre RnSiX₍₄₋ₙ₎ et SiX4 est compris entre 2 et 6.

7. Procédé de fabrication d'une encre sol-gel selon l'une des revendications précédentes, **caractérisé en ce que** le premier silane hydrolysable est un silane quaternaire RsiX₃.

8. Procédé de fabrication d'une encre sol-gel selon l'une des revendications précédentes, **caractérisé en ce que** l'on utilise des particules d'oxyde d'aluminium comme particules inorganiques.

9. Procédé de fabrication d'une encre sol-gel selon l'une des revendications précédentes, **caractérisé en ce que** l'on ajoute un catalyseur acide, et notamment que le précurseur sol-gel présente une valeur pH inférieure à 4.

10. Procédé de fabrication d'une encre sol-gel selon l'une des revendications précédentes, **caractérisé en ce que** l'on règle le sol à une valeur ROR inférieure à 0,4.

11. Encre sol-gel pouvant être fabriquée et étant notamment fabriquée avec un procédé selon l'une des revendications précédentes.

12. Encre sol-gel selon la revendication précédente, **caractérisée en ce que** l'encre sol-gel présente au moins l'une des caractéristiques suivantes :
- le degré de condensation total du liant sol-gel est compris entre 70 et 95 %, de préférence entre 70 et 90 %, et de façon particulièrement avantageuse entre 70 et 80 % ;
- le rapport entre le silane tertiaire et le silane quaternaire est de 2/1 à 6/1 ;
- l'encre sol-gel contient un liant sol-gel fonctionnalisé méthyle et/ou phényle, avec des particules de charge inorganiques ;
- l'encre sol-gel contient un liant ayant un point d'ébullition supérieur à 120 °C et un indice d'évaporation supérieur à 10 ;
- l'encre sol-gel contient des pigments inorganiques, en forme de plaquettes ou non, ainsi que du graphite, en vue de la formation de la pâte de couleur.

13. Encre sol-gel selon l'une des revendications précédentes, **caractérisée en ce que**, à l'état séché, l'encre contient des agglomérats dessiccants des particules de forme irrégulière, avec une dimension fractale comprise entre 1,0 et 2,0, de préférence entre 1,5 et 2,0, et de façon particulièrement avantageuse entre 1,7 et 2,0.

14. Encre sol-gel selon l'une des revendications précédentes, **caractérisée en ce que** l'encre est sensiblement exempte de résine polysiloxane et contient en particulier moins de 5 % de résine polysiloxane,

15. Encre sol-gel selon l'une des revendications précédentes, **caractérisée en ce que** l'encre contient un réseau sol-gel dont le rapport T₃/(T₂+T₁+T₀) est de préférence de 0,2 à 2,0 et notamment de 0,2 à 1,0, et dont le rapport (Q₄+Q₃) / (Q₂+Q₁+Q₀) est de préférence de 0,3 à 3,0, et de façon particulièrement avantageuse de 0,3 à 1,0.

16. Encre sol-gel selon l'une des revendications précédentes, qui contient un liant sol-gel réticulé avec un degré de condensation inférieur à 90 %, présente une viscosité de 10 et 100 mPa·s et contient des particules inorganiques.

17. Encre sol-gel selon la revendication précédente, **caractérisée en ce que** la viscosité allant de 10 à 5 000 mPa·s est conservée lors d'un stockage à température ambiante pendant une durée de plus de 10 semaines, de préférence plus de 15 semaines et de façon particulièrement avantageuse plus de 25 semaines.

18. Utilisation d'une encre sol-gel selon l'une des revendications précédentes, pour l'impression d'un objet selon le procédé de sérigraphie.

19. Utilisation d'une encre sol-gel selon l'une des revendications précédentes, à des fins d'enduction de la face inférieure d'une plaque en vitrocéramique, en particulier d'une plaque de cuisson, et notamment d'une plaque de cuisson par induction ou au gaz.
